# DEMANDE DE BREVET EUROPEEN

(11) **EP 1 158 719 A1**
(43) Date de publication de la demande: **28.11.2001**
(21) Numéro de dépôt: 01410059.8
(22) Date de dépôt: 21.05.2001
(51) Int. Cl.: H04L 12/12

(54) **Circuit pour échanger des communications par une ligne de transmission**

(30) Priorité: 23.05.2000 FR 0006566
(71) Demandeur: STMicroelectronics S.r.l., 20041 Agrate Brianza (Milano) (IT)
(72) Inventeur: Chianale, Alain, 38120 Saint Egreve (FR); Dabin, Emmanuel, 38500 Coublevie (FR)
(74) Mandataire: de Beaumont, Michel

(57) **Abrégé**

L'invention concerne un circuit pour échanger des communications par l'intermédiaire d'une ligne de transmission (6), comprenant un détecteur (22) pour détecter un signal prédéterminé de début de communication, un moyen (12) pour coupler la ligne de transmission d'une part à une ligne d'émission (8) pour fournir à la ligne de transmission des communications sortantes, et d'autre part à une ligne de réception (10) pour recevoir de la ligne de transmission des communications entrantes. Le détecteur est relié à la ligne d'émission.

## Description

La présente invention concerne un circuit permettant d'échanger des communications, par exemple selon la norme "ADSL" (Asymetrical Digital Subscriber Line) aussi appelée norme de "réseau de raccordement numérique asymétrique". Elle concerne plus particulièrement un tel circuit comprenant un détecteur de signal de début de communication.

La norme ADSL est une norme définissant la transmission bidirectionnelle de données numériques entre un abonné et un central, qui prévoit notamment que le central peut fournir des données à l'utilisateur dans une plage de fréquences comprises entre 138 kHz et 1 MHz avec un débit allant jusqu'à 8 mégabits par seconde. Cette norme prévoit également que l'utilisateur peut transmettre des données au central dans une plage de fréquences comprises entre 30 kHz et 138 kHz, avec un débit allant jusqu'à 1 mégabit par seconde.

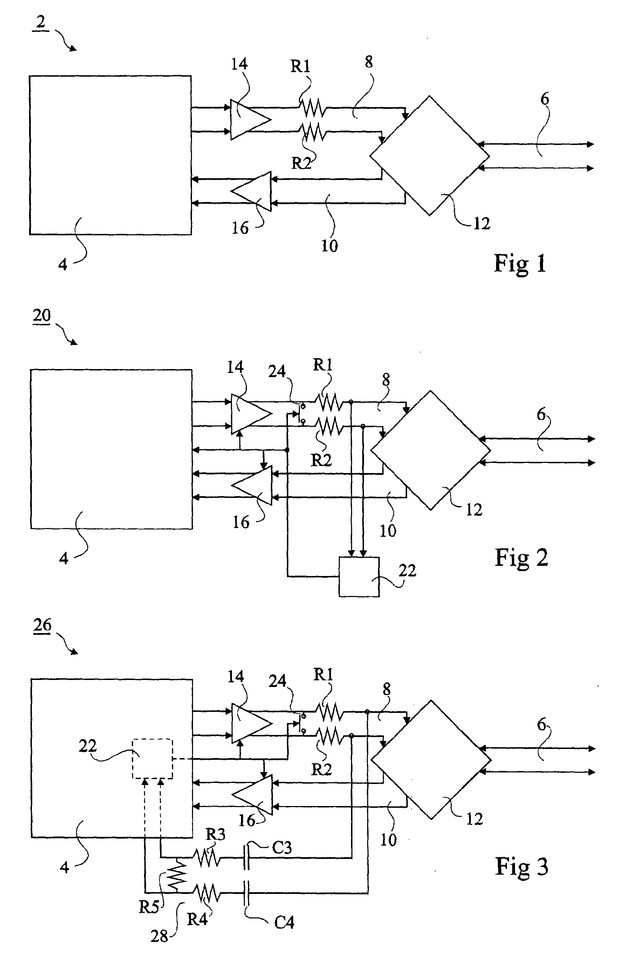

La figure 1 représente sous forme de blocs un circuit 2 permettant à l'ordinateur d'un abonné (non représenté) relié à un modem 4 d'échanger des informations selon la norme ADSL avec un central (non représenté) par l'intermédiaire d'une ligne bidirectionnelle 6 bifilaire. Le modem 4 a une sortie reliée à une ligne d'émission 8 bifilaire et une entrée reliée à une ligne de réception 10 bifilaire. Les lignes d'émission et de réception sont couplées à la ligne de transmission 6 par l'intermédiaire d'un moyen de couplage 12 communément appelé "convertisseur deux fils/quatre fils". Un premier amplificateur 14 est intercalé entre la sortie du modem et la ligne d'émission et un second amplificateur 16 est intercalé entre la ligne de réception et l'entrée du modem. Des résistances R1 et R2, en série avec les sorties de l'amplificateur 14, adaptent l'impédance de la ligne d'émission 8 à l'impédance de la ligne de transmission 6.

Selon la norme ADSL, quand aucune information n'est échangée par l'intermédiaire de la ligne de transmission 6, le circuit 2 est dans un état dit de "veille", ou d'attente de communication. Toute communication est précédée d'un signal de début de communication, ou tonalité de réveil, formé de plusieurs signaux de fréquence pure. Le circuit 2 doit comporter un détecteur de signal de début de communication qui le fait sortir de son état de veille. Classiquement, le détecteur est intégré au modem 4 et il est connecté pour recevoir la sortie de l'amplificateur 16. Cependant, une telle connexion impose de laisser l'amplificateur 16 fonctionner en mode nominal alors que le circuit 2 est en état de veille. La consommation de l'amplificateur 16 est relativement élevée, et, en état de veille, le circuit 2 ne peut satisfaire à des normes internationales telles que la norme USB (Universal Serial Bus), qui fixe notamment la consommation maximale en état de veille. A titre d'exemple, la consommation d'un amplificateur tel que l'amplificateur 16 est de l'ordre de 100 mW/h alors que la norme USB demande une consommation en état de veille au maximum égale à 10 mW/h. Il est donc impossible de disposer d'un circuit 2 présentant un mode basse consommation en état de veille.

Pour résoudre ce problème, on peut imaginer de connecter le détecteur de signal de début de communication directement sur la ligne de réception 10, et de mettre l'amplificateur 16 en mode basse consommation. Cependant, cette solution n'est pas retenue car elle est très onéreuse. En effet, surtout dans le cas où la ligne de transmission 6 est longue, le signal reçu par l'amplificateur 16 est parfois très faible, allant jusqu'à atteindre des niveaux aussi bas que 10 µV. L'amplificateur 16 doit donc être un amplificateur particulièrement sensible, dont la réalisation est critique. Cet amplificateur est normalement connecté directement à un enroulement transformateur et son impédance d'entrée est prévue en fonction de cette connexion. Si on rajoute sur l'entrée de l'amplificateur 16 un circuit détecteur de signal, on perturbe le fonctionnement de cet amplificateur, même si l'on prévoit de déconnecter le circuit détecteur quand l'amplificateur est actif. En effet, dans ce dernier cas on rajoutera quand même sur l'entrée de l'amplificateur au moins la capacité parasite d'un interrupteur assurant ladite déconnexion.

On peut également imaginer de connecter directement le détecteur de signal de début de communication à la ligne de transmission 6. Cette solution est aussi écartée à cause de son prix de revient. En effet, une isolation électrique importante, de l'ordre de 3500 V, imposée par des normes internationales, doit exister entre la ligne de transmission 6 et tout circuit de l'abonné. Cette isolation est réalisée par le moyen de couplage 12, qui comprend classiquement un transformateur dont un enroulement primaire est relié à la ligne de transmission 6, et dont des premier et second enroulements secondaires sont reliés respectivement à la ligne d'émission 8 et à la ligne de réception 10. Un détecteur directement connecté à la ligne 6 devrait présenter la même isolation électrique que le moyen de couplage 12, ce qui rendrait ce circuit trop coûteux.

Ainsi, un objet de la présente invention est de prévoir un circuit pour échanger des communications avec une ligne de transmission selon la norme ADSL, présentant un état de veille à basse consommation.

Un autre objet de la présente invention est de prévoir un tel circuit qui soit peu coûteux et facile à mettre en oeuvre.

Pour atteindre ces objets, la présente invention prévoit un circuit pour échanger des communications par l'intermédiaire d'une ligne de transmission, comprenant un détecteur pour détecter un signal prédéterminé de début de communication, un moyen pour coupler la ligne de transmission d'une part à une ligne d'émission pour fournir à la ligne de transmission des communications sortantes, et d'autre part à une ligne de réception pour recevoir de la ligne de transmission des communications entrantes, le détecteur étant relié à la ligne d'émission.

Selon un mode de réalisation de la présente invention, le circuit comprend un modem ayant un mode de fonctionnement nominal et un mode de fonctionnement basse consommation, une sortie et une entrée du modem étant respectivement reliées aux lignes d'émission et de réception, le détecteur étant connecté de manière à faire passer le modem de son mode de fonctionnement basse consommation à son mode de fonctionnement nominal lorsqu'il détecte ledit signal prédéterminé.

Selon un mode de réalisation de la présente invention, des premier et second amplificateurs sont intercalés respectivement entre la sortie du modem et la ligne d'émission, et entre l'entrée du modem et la ligne de réception, les amplificateurs ayant chacun un mode de fonctionnement nominal et un mode de fonctionnement basse consommation, le détecteur étant connecté de manière à faire passer les premier et second amplificateurs du mode de fonctionnement basse consommation au mode de fonctionnement nominal lorsqu'il détecte ledit signal prédéterminé.

Selon un mode de réalisation de la présente invention, la ligne d'émission est bifilaire et le premier amplificateur comporte deux bornes de sortie reliées chacune à un fil de la ligne d'émission, le circuit comprenant un commutateur pour court-circuiter les deux bornes de sortie du premier amplificateur lorsque le premier amplificateur est en mode de fonctionnement basse consommation

Selon un mode de réalisation de la présente invention, le modem et le détecteur font partie d'un même circuit intégré.

Selon un mode de réalisation de la présente invention, le modem, le détecteur et les premier et second amplificateurs font partie d'un même circuit intégré.

Selon un mode de réalisation de la présente invention, le modem, le détecteur, les premier et second amplificateurs et le commutateur font partie d'un même circuit intégré.

Selon un mode de réalisation de la présente invention, l'entrée du détecteur est reliée à la ligne d'émission par l'intermédiaire d'un diviseur de tension.

Selon un mode de réalisation de la présente invention, le moyen de couplage comprend un transformateur dont un enroulement primaire est relié à la ligne de transmission, et dont des premier et second enroulements secondaires sont respectivement reliés aux lignes d'émission et de réception.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, précédemment décrite, représente sous forme de blocs un circuit pour échanger des communications avec une ligne de transmission suivant la norme ADSL ;
la figure 2 représente sous forme de blocs un circuit selon la présente invention pour échanger des communications avec une ligne de transmission selon la norme ADSL ; et
la figure 3 représente une variante de réalisation d'un circuit selon la présente invention.

Dans les figures suivantes, de mêmes références représentent de mêmes éléments qu'en figure 1. Pour des raisons de clarté, seuls les éléments nécessaires à la compréhension de l'invention ont été représentés.

La figure 2 représente sous forme de blocs un circuit 20 selon la présente invention pour échanger des communications par l'intermédiaire d'une ligne de transmission 6. Un modem 4 a une sortie et une entrée respectivement reliées à des lignes d'émission 8 et de réception 10 par l'intermédiaire d'amplificateurs 14 et 16. Les lignes d'émission et de réception sont couplées à la ligne de transmission 6 par un moyen de couplage 12.

Selon un aspect de l'invention, un détecteur de signal de début de communication 22, externe au modem 4, est relié à la ligne d'émission 8. En effet, le moyen de couplage qui couple la ligne de transmission aux lignes d'émission et de réception est formé d'un transformateur, c'est-à-dire un circuit bidirectionnel, ce qui fait que l'on retrouve sur la ligne d'émission les communications émises par le central. Par conséquent, le signal de début de communication se retrouve aussi sur la ligne d'émission 8 et il est possible de le détecter à cet endroit. Le modem, l'amplificateur 16 et l'amplificateur 14 peuvent alors être mis en mode basse consommation lorsque le circuit 20 est en état de veille. Aussi, le circuit 20 de l'invention peut avoir une consommation faible en mode basse consommation, par exemple inférieure aux 10 mW/h imposés par la norme USB. Le circuit 20 peut être donc relié à un port USB et en recevoir son alimentation.

Le fonctionnement du détecteur 22 est le suivant. Le circuit 20 est à état de veille en mode basse consommation lorsqu'aucun échange de communication n'a lieu entre le modem 4 et le central. Seul le détecteur 22 est alors en mode de fonctionnement nominal. Le détecteur 22 est conçu pour détecter un signal de début de communication et, en pratique, il peut ne détecter qu'une seule des fréquences pures qui composent le signal de début de communication. Lorsque le détecteur 22 détecte un signal de début de communication, il fait sortir le modem 4 et les amplificateurs 14 et 16 de leur mode de fonctionnement basse consommation pour les faire passer en mode de fonctionnement nominal. Le modem 4 peut alors recevoir la communication qui suit le signal de début de communication.

La ligne d'émission 8 doit avoir une impédance adaptée à l'impédance de la ligne de transmission 6. Cette adaptation d'impédance est classiquement réalisée par deux résistances R1 et R2 disposées sur la ligne 8 en série avec les sorties de l'amplificateur 14. Or, de manière générale, l'impédance de sortie de l'amplificateur 14 est sensiblement nulle lorsque ce dernier est en mode de fonctionnement nominal et elle est très importante lorsque l'amplificateur est en mode de fonctionnement basse consommation. Pour cette raison, en figure 2, un commutateur 24 est prévu pour court-circuiter les deux bornes de sortie de l'amplificateur 14 lorsque le circuit 20 est en mode basse consommation. Lorsque le détecteur 22 détecte un signal de début de communication, le commutateur 24 passe à l'état ouvert. Cela permet de conserver une ligne d'émission adaptée, que le circuit 20 soit en mode basse consommation ou non.

La figure 3 représente sous forme de blocs un circuit 26 selon la présente invention dans lequel le détecteur 22 est intégré dans le modem 4. Le détecteur 22 et le modem 4 ont alors des tensions d'alimentation communes. On prévoit selon la présente invention de relier l'entrée du détecteur 22 à la ligne d'émission 8 par l'intermédiaire d'un diviseur de tension 28, par exemple composé de deux résistances R3 et R4 de même valeur connectées chacune en série à un fil de la ligne d'émission, et reliées entre elles par une résistance R5. Des capacités optionnelles C3 et C4, destinées à supprimer d'éventuelles composantes continues, sont connectées en série respectivement avec les résistances R3 et R4. Les niveaux des tensions présentes sur la ligne d'émission 8, définis par la norme ADSL, peuvent être trop élevés par rapport aux tensions d'alimentation communes du détecteur 22 et du modem 4. Ainsi, les valeurs des résistances R3, R4 et R5 sont choisies pour que les tensions fournies en entrée du détecteur 22 ne soient pas supérieures aux tensions d'alimentation du modem 4. A titre d'exemple, les résistances R3 et R4 peuvent avoir une valeur de 100 kΩ et la résistance R5 peut avoir une valeur de 200 kΩ.

Bien entendu, la présente invention est susceptible de diverses variantes et modifications qui apparaîtront à l'homme du métier.

Ainsi, les amplificateurs 14 et 16 ont été décrits comme externes au modem 4, mais ils peuvent également être intégrés au modem. Il en est de même du commutateur 24.

Aussi, le commutateur 24 pourra être un transistor ou tout autre élément de commutation propre à remplir les mêmes fonctions. On pourra également connecter en série avec le commutateur une faible résistance correspondant à l'impédance de sortie de l'amplificateur 14 en mode de fonctionnement nominal.

Egalement, le moyen de couplage 12 pourra être de tout type approprié. Aussi, le transformateur du moyen de couplage pourra comporter plus de deux enroulements secondaires.

On a décrit la présente invention dans le cadre de la norme ADSL, mais, bien entendu, la présente invention s'applique aussi à la norme VDSL, où des fréquences s'étendant jusqu'à 12 MHz sont utilisées, ainsi qu'à toute norme du type xDSL. De façon générale, la présente invention s'applique à tout circuit propre à échanger des communications par l'intermédiaire d'une ligne de transmission, et comportant une ligne d'émission et une ligne de réception.

## Revendications

1. Circuit pour échanger des communications par l'intermédiaire d'une ligne de transmission (6), comprenant :
un détecteur (22) pour détecter un signal prédéterminé de début de communication,
un moyen (12) pour coupler la ligne de transmission d'une part à une ligne d'émission (8) pour fournir à la ligne de transmission des communications sortantes, et d'autre part à une ligne de réception (10) pour recevoir de la ligne de transmission des communications entrantes,
**caractérisé en ce que** le détecteur est relié à la ligne d'émission.

2. Circuit selon la revendication 1, comprenant un modem ayant un mode de fonctionnement nominal et un mode de fonctionnement basse consommation, une sortie et une entrée du modem étant respectivement reliées aux lignes d'émission et de réception, le détecteur (22) étant connecté de manière à faire passer le modem de son mode de fonctionnement basse consommation à son mode de fonctionnement nominal lorsqu'il détecte ledit signal prédéterminé.

3. Circuit selon la revendication 2, dans lequel des premier (14) et second (16) amplificateurs sont intercalés respectivement entre la sortie du modem et la ligne d'émission, et entre l'entrée du modem et la ligne de réception, les amplificateurs ayant chacun un mode de fonctionnement nominal et un mode de fonctionnement basse consommation, le détecteur (22) étant connecté de manière à faire passer les premier et second amplificateurs du mode de fonctionnement basse consommation au mode de fonctionnement nominal lorsqu'il détecte ledit signal prédéterminé.

4. Circuit selon la revendication 3, dans lequel la ligne d'émission est bifilaire et dans lequel le premier amplificateur comporte deux bornes de sortie reliées chacune à un fil de la ligne d'émission, le circuit comprenant un commutateur pour court-circuiter les deux bornes de sortie du premier amplificateur lorsque le premier amplificateur est en mode de fonctionnement basse consommation.

5. Circuit selon la revendication 2, dans lequel le modem et le détecteur font partie d'un même circuit intégré.

6. Circuit selon la revendication 3, dans lequel le modem, le détecteur et les premier et second amplificateurs font partie d'un même circuit intégré.

7. Circuit selon la revendication 4, dans lequel le modem, le détecteur, les premier et second amplificateurs et le commutateur font partie d'un même circuit intégré.

8. Circuit selon une des revendications 5 à 7, dans lequel l'entrée du détecteur est reliée à la ligne d'émission par l'intermédiaire d'un diviseur de tension.

9. Circuit selon l'une quelconque des revendications précédentes, dans lequel le moyen de couplage comprend un transformateur dont un enroulement primaire est relié à la ligne de transmission, et dont des premier et second enroulements secondaires sont respectivement reliés aux lignes d'émission et de réception.
